**Europäisches Patentamt**

**European Patent Office**

**Office européen des brevets**

(19)

(11) Veröffentlichungsnummer: **0 033 085**
**B1**

(12)

# EUROPÄISCHE PATENTSCHRIFT

(45) Veröffentlichungstag der Patentschrift:
24.10.84

(51) Int. Cl.³: **G 21 C 9/00**

(21) Anmeldenummer: **81100191.6**

(22) Anmeldetag: **13.01.81**

(54) **Wärmedämmendes Verschlusssystem für Druckentlastungsöffnungen von Trennwänden, insbesondere bei Kernreaktorgebäuden.**

(30) Priorität: **23.01.80 DE 3002335**

(43) Veröffentlichungstag der Anmeldung:
**05.08.81 Patentblatt 81/31**

(45) Bekanntmachung des Hinweises auf die Patenterteilung:
**24.10.84 Patentblatt 84/43**

(84) Benannte Vertragsstaaten:
**AT BE CH DE FR GB IT LI LU NL SE**

(56) Entgegenhaltungen:
**CH - A - 591 742**
**DE - A - 2 160 991**
**DE - A - 2 719 923**
**DE - A - 2 924 073**
**DE - B - 1 078 247**
**DE - B - 1 145 881**
**US - A - 4 064 003**

(73) Patentinhaber: **KRAFTWERK UNION AKTIENGESELLSCHAFT, Wiesenstrasse 35, D-4330 Mülheim (Ruhr) (DE)**
Patentinhaber: **Grünzweig + Hartmann Montage GmbH, Westendstrasse 17, D-6700 Ludwigshafen/Rhein (DE)**

(72) Erfinder: **Fricker, Wolfgang-Peter, An der Quelle 23, D-6713 Freinsheim (DE)**
Erfinder: **Scholz, Manfred, Zeiss-Strasse 8, D-8520 Erlangen (DE)**
Erfinder: **Bauche, Heinfried, Elise-Späth-Strasse 10, D-8520 Erlangen (DE)**
Erfinder: **Gollasch, Bernd, Pottensteiner Strasse 16, D-8500 Nürnberg (DE)**

(74) Vertreter: **Mehl, Ernst, Dipl.-Ing. et al, Postfach 22 01 76, D-8000 München 22 (DE)**

## Beschreibung

Die Erfindung bezieht sich auf ein wärmedämmendes Verschlusssystem für Druckentlastungsöffnungen von Trennwänden, insbesondere derjenigen von Kernreaktorgebäuden, gemäss Oberbegriff des Anspruchs 1.

Durch die DE-A-2 160 991 ist ein Verschlusssystem für Druckentlastungsöffnungen im biologischen Schild eines Kernreaktordruckbehälters bekannt, bei dem um den Umfang des Reaktordruckbehälters herum verteilt im biologischen Schild mehrere mit Abschirmmaterial gefüllte Abschirmkammern vorgesehen sind, die nach aussen durch Glasscheiben mit einem vorgegebenen Berstdruck gasdicht abgeschlossen sind.

Ein ähnliches Verschlusssystem zeigt die DE-A-2 719 923, bei welchem die Entlastungsöffnungen verschliessenden Abschirmelemente aus einer gitterförmigen Konstruktion bestehen, deren Gittermaschen mit granulatförmigem Abschirmmaterial gefüllt sind. Die gitterförmige Konstruktion ist dabei mit Hilfe eines Rahmens in der Öffnung einer Trennwand verankert, und die Gittermaschen sind mit Blechscheiben verschlossen, welche bei Auftreten eines bestimmten Überdruckes zusammen mit der Granulatfüllung ausgeschoben werden.

Die vorliegende Erfindung geht gleichfalls aus von durch einen reaktorseitigen Überdruck nach aussen aus ihrer Verankerung drückbaren Verschlusselementen in Leichtbauweise. Die Verschlusselemente sollen aber insbesondere wärmedämmend sein. Sie sind insbesondere im Bereich der Durchdringung der Hauptkühlmittelstutzen des Reaktordruckbehälters durch den biologischen Schild angeordnet. Im Falle eines postulierten Bruches (an sich unwahrscheinlich) einer Hauptkühlmittelrohrleitung würde Kühlmittel über ein in seiner Grösse auf einen bestimmten Querschnitt, z.B. 200 qcm, festgelegtes Leck zwischen einem Doppelrohr und dem Hauptkühlmittelstutzen in einen Ringraum strömen, der vom Reaktordruckbehälter und dem biologischen Innenschild gebildet wird. Der hierdurch aufgebaute Überdruck muss eigensicher abgebaut werden. Der biologische Innenschild bildet zusammen mit dem äusseren Tragschild, an welchem die Tragkonstruktion des Reaktordruckbehälters gelagert und verankert ist, den gesamten biologischen Schild. Es geht aber nicht nur um den Abbau etwaigen Überdruckes; der Stutzenraum muss zudem gegen Wärmeabfuhr nach aussen isoliert sein. Die Stutzenraumisolierung bildet so die Trennung des druckbelasteten Bereiches zum Ringspalt, der vom Tragschild und Innenschild seine Geometrie erhält.

Der Erfindung liegt die Aufgabe zugrunde, ein wärmedämmendes Verschlusssystem für Druckentlastungsöffnungen von Trennwänden der eingangs genannten Art zu schaffen, durch welches ein konvektionsdichter Abschluss der Druckentlastungsöffnungen ermöglicht ist und welches die gleiche Wirksamkeit hinsichtlich seiner Wärmedämmung wie das anschliessende Wärmedämmungssystem hat. Weitere Anforderungen, die durch die Erfindung erfüllt sein sollen, sind die folgenden: Rechnerisch und experimentell genau nachweisbare Berstdrücke für das Verschlusssystem; Gestaltung der Verschlusselemente und des Verschlusssystems in der Weise, dass ein Verklemmen bzw. Verkanten innerhalb der Druckentlastungsöffnung während des Ausschiebevorgangs unmöglich wird, und schliesslich eine möglichst leichte Bauart der Verschlusselemente, die im Ansprechfall aus der Druckentlastungsöffnung herausgedrückt werden, um Beschädigung von Komponenten der Umgebung zu vermeiden.

Erfindungsgemäss wird die gestellte Aufgabe durch die im Kennzeichen des Anspruchs 1 angegebenen Merkmale gelöst. Weiterbildungen des Erfindungsgegenstandes sind in den abhängigen Ansprüchen beschrieben.

Aus der DE-B-1 145 881 sind an sich Berstscheiben-Sicherungen für Apparate oder Rohrleitungen, mit an einer abdichtenden Berstkante anliegender, umlaufender Scherkante bekannt.

Die mit der Erfindung erzielbaren Vorteile sind vor allem darin zu sehen, dass die Kassetteneinsätze Leichtbauelemente mit hohem Wärmedämmvermögen sind, durch welche nun auch im Stutzenraumbereich, insbesondere bei Druckwasserreaktor-Anlagen Druckentlastungsöffnungen ermöglicht sind.

Im folgenden wird anhand mehrerer Ausführungsbeispiele, die in der Zeichnung dargestellt sind, die Erfindung noch näher erläutert. Es zeigt:

Fig. 1 vereinfacht im Ausschnitt einen Stutzenraumbereich bei einem Druckwasserreaktor mit wärmedämmender Trennwand und einem Verschlusselement;

Fig. 2 den Schnitt II–II aus Fig. 1, d.h. das Verschlusselement mit seinem Sitz im Teilschnitt;

Fig. 3 ein zweites Ausführungsbeispiel in entsprechender Darstellung zu Fig. 2 mit einer Glasscheibe als Bersthaut;

Fig. 4 eine im Vergleich zu Fig. 3 etwas geänderte Einspannung der Glasscheibe (drittes Ausführungsbeispiel);

Fig. 5 ein viertes Ausführungsbeispiel, das ähnlich dem nach Fig. 3 ist, wobei jedoch anstelle von Mineralfasern als Dämmstoff zueinander beabstandete Metallfolien verwendet sind;

Fig. 6 ein fünftes Ausführungsbeispiel mit einer Berstfolie anstelle einer Glasscheibe als Bersthaut;

Fig. 7 das Detail A aus Fig. 3, 4 und 6 vergrössert;

Fig. 8 einen Kernreaktordruckbehälter mit seinem biologischen Schild im Ausschnitt, um die Lage des wärmedämmenden Verschlusssystems zu zeigen; und

Fig. 9 eine Abwicklung der einen Hälfte des wärmedämmenden Verschlusssystems für den Stutzenraumbereich eines Druckwasserreaktors.

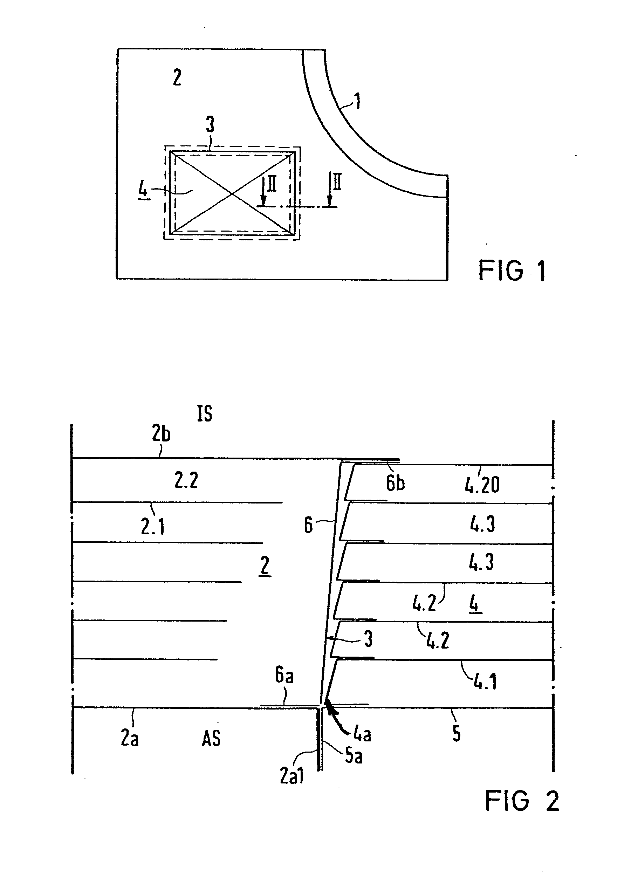

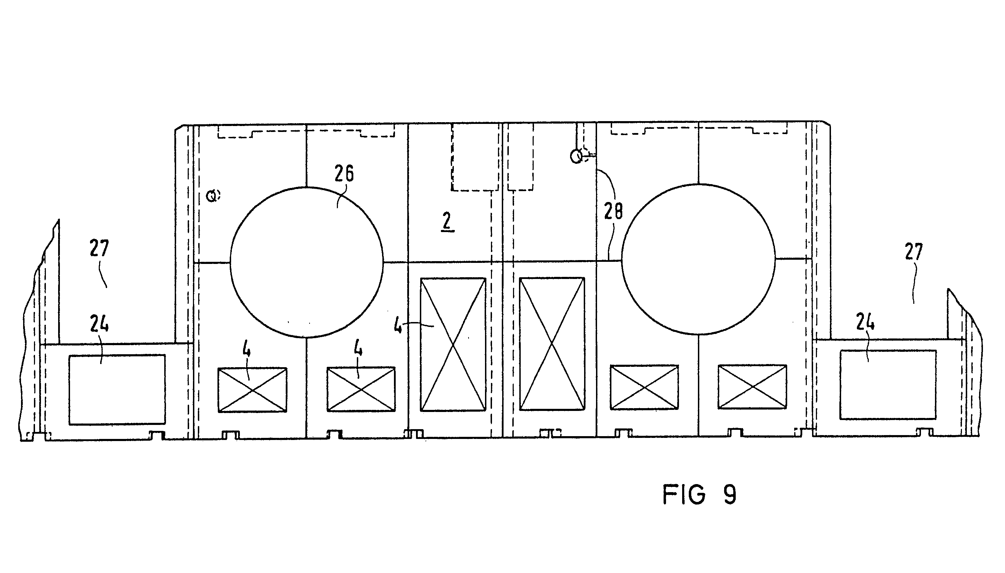

Das wärmedämmende Verschlusssystem ist gemäss Fig. 1 im Stutzenraumbereich eines Druckwasser-Kernreaktors angeordnet, dessen Stutzenkontur bei 1 angedeutet und dessen wärmedämmende Trennwand 2 Druckentlastungsöffnungen 3 aufweist, die mit Verschlusselementen 4 in Form von Wärmedämm-Kassetteneinsätzen verschlossen sind. Fig. 1 zeigt lediglich einen solchen Kassetteneinsatz 4; Fig. 9 dagegen zeigt einen grösseren Ausschnitt mit mehreren Kassetteneinsätzen, worauf noch eingegangen wird.

Fig. 2 zeigt, dass das als Wärmedämm-Kassetteneinsatz ausgebildete Verschlusselement 4 mit einer umlaufenden Scherkante 4a an seiner Frontseite an einer äusseren abdichtenden Bersthaut 5 anliegt. Letztere ist am Umfang der von der Innenseite IS zur Aussenseite AS durch konische bzw. pyramidenstumpfförmig verlaufende Wände 6 begrenzten Druckentlastungsöffnung 3 gasdicht eingeschweisst, wozu die Berstfolie 5 mit einem umgebördelten Rand 5a versehen ist, welcher an den abgewinkelten Rand 2a1 der Aussenstirnwand 2a der Trennwand 2 anstösst, deren Innenstirnwand mit 2b bezeichnet ist. Die Trennwand 2 ist in Ganzmetallisolierung ausgeführt mit bei 2.1 angedeuteten, etwa planparallel zueinander beabstandeten Dämmfolien, welche zwischen sich und der Innen- und Aussenstirnwand 2b, 2a die luftgefüllten Dämmzellen 2.2 bilden. Die Begrenzungswand 6 der Druckentlastungsöffnung 3 wird auch durch eine Metallfolie gebildet, welche mit abgewinkelten Randbereichen 6a an der Aussenseite AS und 6b an der Innenseite IS gegen die Aussenstirnwand 2a bzw. die Innenstirnwand 2b stösst und mit diesen Wänden gasdicht verschweisst ist.

Die als Metallfolie ausgebildete Bersthaut 5 ist in ihrer Wandstärke (in Druckdifferenzrichtung) so bemessen, dass der Kassetteneinsatz 4 bei Erreichen bzw. Überschreiten der zulässigen Druckdifferenz zwischen der Innen- und der Aussenseite IS, AS die Bersthaut mit der umlaufenden Scherkante 4a abschert und selbst aus seinem Sitz gedrückt wird. Er fällt dann nach aussen, kann aber, da er in Leichtbauweise ausgeführt ist, benachbarte Wände oder Bauteile nicht beschädigen.

So weist in dem dargestellten Ausführungsbeispiel die Bersthaut eine Stärke von 0,4 mm auf; dahinter befindet sich die die Scherkante 4a aufweisende Druckfolie 4.1. Dahinter sind wiederum eine Anzahl von Dämmfolien 4.2 zueinander beabstandet unter Bildung von Dämmzellen 4.3 gestapelt, deren Anzahl sich nach der Dicke des Dämmpaketes bzw. der Trennwandstärke richtet. Die konische Umfassung 6 ist aus etwa 1 mm dickem Austenitblech gefertigt. Bei der in Fig. 2 dargestellten Konstruktion werden beim Auftreten des erwähnten Differenzdruckes die Folien 4.2, beginnend auf der Druckseite (= Innenseite IS) des Systems, zusammengepresst. Die flächemmässig kleinste Folie 4.20 befindet sich auf der Druckseite. Somit wird ein Klemmen bzw. Verkanten der Folien 4.2 vermieden. Nach dem Zusammenstauchen der Folien wirkt die Belastung auf die 1 mm starke Druck- bzw. Zwischenfolie 4.1. Diese steifere Einlage bringt nun die Druckbelastung als Schubkraft auf die mit dem Rahmen des umgebenden Dämmsystems dicht verschweisste 0,4 mm dicke Berstfolie 5 und schert diese ab. Es folgt das Ausschieben des kompletten Einsatzes; der Überströmquerschnitt steht für das Medium zum Ausströmen offen.

Beim Ausführungsbeispiel nach Fig. 2 ist also der Kassetteneinsatz 4 in Ganzmetall ausgeführt, wobei die Dämmfolien 4.20, 4.2 und 4.1 an ihrem Aussenrand jeweils V-förmig doppelt abgekantet sind und mit dem Aussenschenkel ihrer Abkantungen jeweils konvektionshemmend an der Bodenfläche der jeweils benachbarten Dämmfolie anliegen.

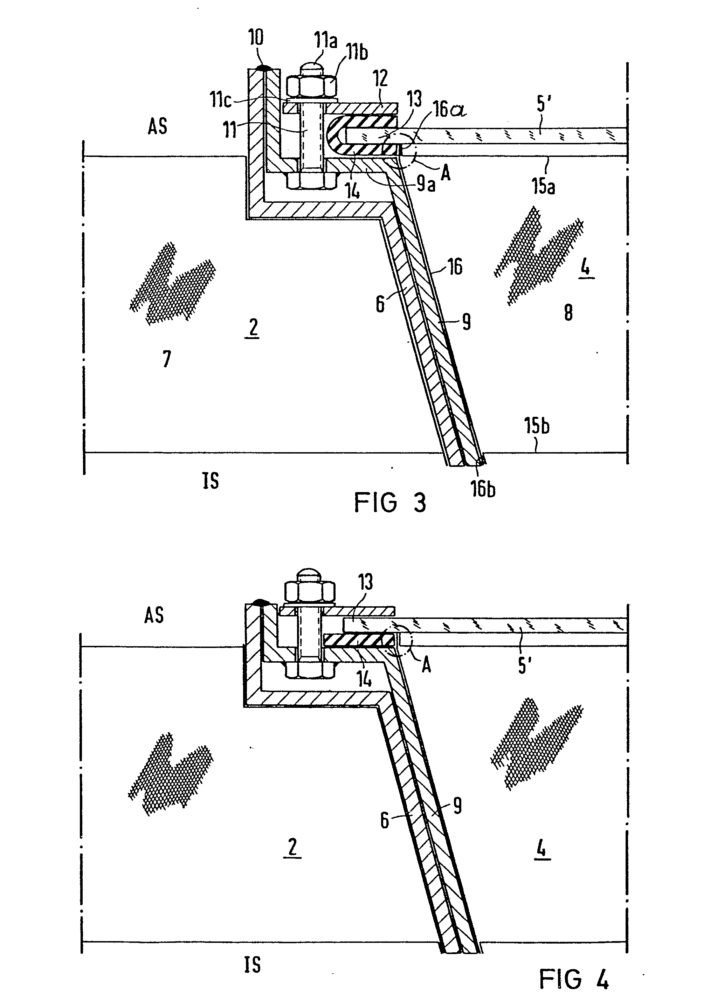

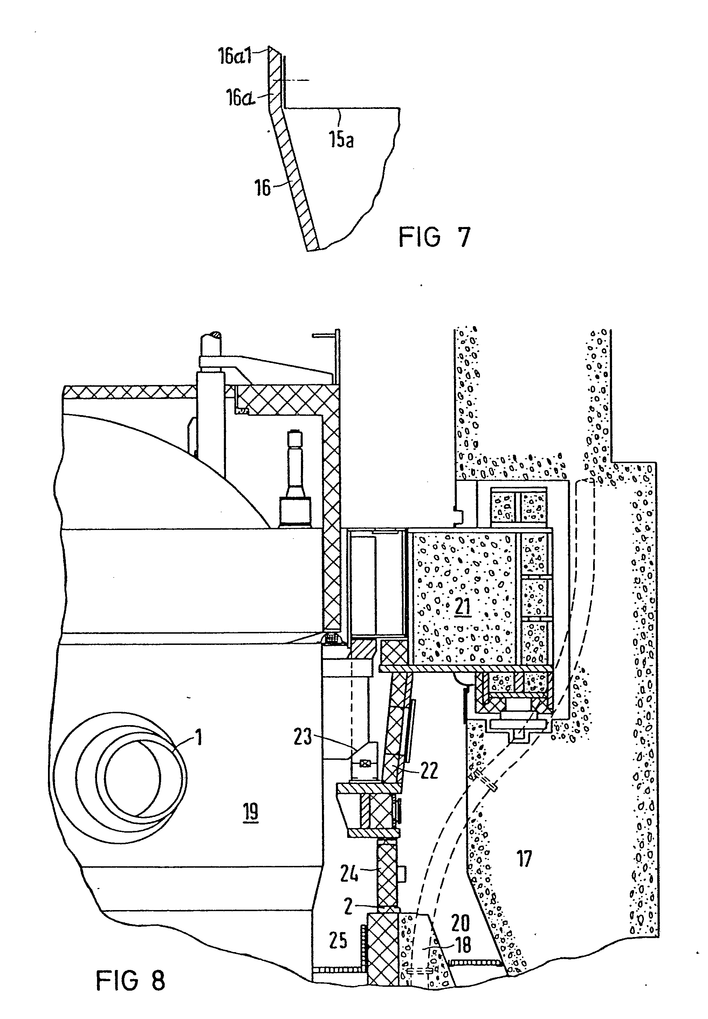

Beim zweiten Ausführungsbeispiel nach Fig. 3 enthält der Kassetteneinsatz 4 als Dämmstoff Mineralfasern 8, und auch die Trennwand 2 enthält anstelle von Dämmfolien Mineralfasern 7. Die Bersthaut 5′ ist hier eine gläserne Berstscheibe, die dichtend an dem den Kassetteneinsatz 4 umgebenden Trennwandbereich eingespannt ist. Der Sitz des Bersteinsatzes 4 wird wieder von der konisch von der Innenseite IS zur Aussenseite AS zulaufenden Begrenzungswand 6 gebildet, und am Innenumfang dieser Begrenzungswand 6 ist ein weiterer entsprechender konisch zulaufender Einsatz 9 eingesetzt, welcher an seiner Aussenseite mit einem Absatz 9a den Sitz für die Glasscheibe 5′ bildet. Der Einsatz 9 ist in seinem äusseren Randbereich mit der Begrenzungswand 6 bei 10 gasdicht verschweisst. An dem Absatz 9a ist eine Spannschraube 11 verankert und gasdicht festgeschweisst, auf deren nach aussen vorstehendem Ende 11a eine Halteplatte 12 mit entsprechenden Durchgangsbohrungen aufgeschoben ist. Um den Aussenrand 13 der Glasscheibe 5′ ist ein Dichtungsstreifen 14 U-förmig herumgelegt; er besteht aus einem wärmedämmenden Dichtungsmaterial auf Asbestbasis. Die Halteplatte 12 wird von der Mutter 11b mit Beilagscheibe 11c gegen den Dichtungsstreifen 14 und den Rand 13 gepresst und drückt diese Teile dichtend gegen den Absatz 9a. Der eigentliche Bersteinsatz 4 weist eine äussere Metallfolienkapselung mit den Stirnblechen 15a, 15b und dem Mantelblech 16 auf. Das Mantelblech hat auf der Aussen- und der Innenseite AS, IS jeweils einen umlaufenden vorstehenden Rand 16a, 16b, der mit den Stirnblechen 15a, 15b jeweils gasdicht verschweisst ist. Hierzu sind die Stirnbleche 15a, 15b an ihrem Aussenrand umgelegt. Der umlaufende vorstehende Rand 16a ist in diesem Ausführungsbeispiel mit einer spitzwinklig zulaufenden Berstkante 16a1 versehen, wie es das Detail A nach Fig. 7 näher zeigt. Damit ist eine Bruchbestimmungskante gebildet, die im Ansprechfalle auf die Glasscheibe 5′ drückt und diese aufgrund der Scherbeanspruchung zum Bersten bringt, wonach der Kassetteneinsatz 4 wieder ausgeschoben wird.

Fig. 4 zeigt als drittes Ausführungsbeispiel eine Variante im Vergleich zu Fig. 3 insofern, als der Dichtungsstreifen 14 den Rand 13 der Glasscheibe 5′ nicht U-förmig umfasst, sondern lediglich an einer Seite anliegt. Im übrigen ist die Ausführung so wie nach Fig. 3.

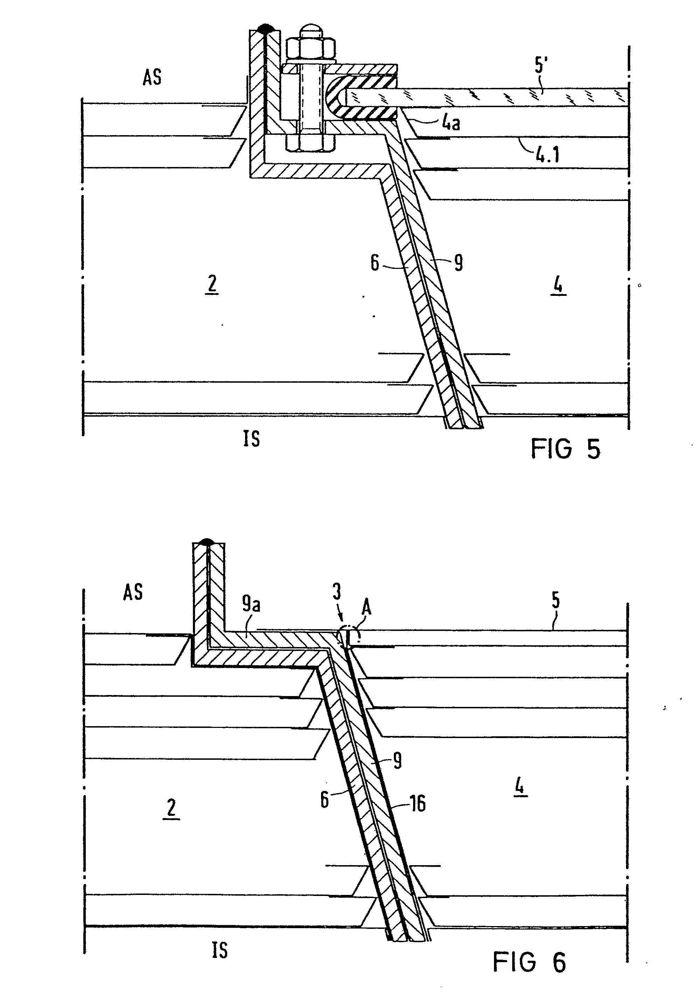

Das vierte Ausführungsbeispiel nach Fig. 5 stimmt wieder mit demjenigen nach Fig. 3 bis auf die Tatsache überein, dass sowohl die Trennwand 2 als auch das Verschlusselement 4 eine Metallfolienisolierung aufweisen und die Scherkante der Druckfolie 4.1 so ausgebildet ist wie die Scherkante 4a nach Fig. 2.

Beim fünften Ausführungsbeispiel nach Fig. 6 ist gleichfalls für die Trennwand 2 und das Verschlusselement 4 eine Metallfolienisolierung vorgesehen entsprechend Fig. 2, jedoch ist abweichend vom Ausführungsbeispiel nach Fig. 5 keine gläserne Berstscheibe, sondern eine metallische Berstfolie 5 zum Abschluss der Druckentlastungsöffnung 3, die in diesem Falle vom konischen Sitzblech 9 gebildet wird, vorgesehen. Die Ausbildung der Scherkante 16a1 (vgl. Fig. 7) ist so wie diejenige nach den Fig. 3 und 4. Sie wird wiederum von einem vorstehenden Rand des Mantelblechs 16 gebildet.

Der Ausschnitt nach Fig. 8 lässt den äusseren Tragschild 17 und den Innenschild 18 eines biologischen Schildes für einen Kernreaktor-Druckbehälter 19 mit Stutzen 1 erkennen. Zwischen Tragschild 17 und Innenschild 18 ist ein Ringspalt 20 angeordnet, der u.a. der Schildkühlung dient, und ferner zum Abbau etwaigen Überdruckes, der sich durch einen im Tragschild 17 an seinem unteren (nicht dargestellten) Ende angeordneten Überströmkanal mit Überstromklappe abbauen kann. Der im Tragschild 17 verankerte Ringkastenträger 21 bildet jeweils mit über den Umfang des Druckbehälters 19 verteilten Konsolen 22 Auflager für die Tragpratzen 23 des Druckbehälters 19. Die Wiederholungsprüftür 24, welche einen Zugang zum Ringspalt 25 zwischen Druckbehälter 19 und Innenschild 18 gestattet, bildet einen Bestandteil der Trennwand 2 im Stutzenraumbereich.

Fig. 9 zeigt im Ausschnitt die Abwicklung der Trennwand im genannten Stutzenraumbereich mit den Stutzen-Durchführungsöffnungen 26, den Wiederholungsprüftüren 24 und den durch Diagonal-Linien kenntlich gemachten, als Berstelemente ausgeführten Verschlusselementen 4. Von den acht Stutzendurchführungen 26 sind lediglich zwei dargestellt, die Abwicklung überstreicht deshalb etwas mehr als 45°. Über den Wiederholungsprüftüren 24 befinden sich Trennwandaussparungen 27 dort, wo die Tragkonsolen 22 (vgl. Fig. 8) in den Trennwandbereich ragen.

Der besondere Vorteil des Verschlusssystems ist, dass die Trennwand 2 komplett im Baukastensystem (siehe die Trennfugen 28 zwischen einzelnen Trennwandbausteinen) hergestellt und probeweise ausserhalb des Reaktorgebäudes montiert werden kann. Wenn alle Masse stimmen, kann der Einbau im Bereich des Innenschildes (Fig. 8) sukzessive erfolgen.

## Patentansprüche

1. Wärmedämmendes Verschlusssystem für Druckentlastungsöffnungen von Trennwänden, insbesondere derjenigen von Kernreaktorgebäuden im Bereich der Durchdringung der Hauptkühlmittelstutzen eines Reaktordruckbehälters durch den biologischen Schild, mit durch einen reaktorseitigen Überdruck nach aussen aus ihrer Verankerung drückbaren Bersteinsätzen in Leichtbauweise, dadurch gekennzeichnet, dass

a) die Bersteinsätze (4) als Wärmedämm-Kassetteneinsätze ausgebildet sind; dass

b) die Bersteinsätze (4) mit einer umlaufenden Scherkante (4a, 16a1) an ihrer Frontseite an einer äusseren abdichtenden Bersthaut (5, 5') solcher Stärke anliegen, dass die Bersthaut (5, 5') bei Erreichen bzw. Überschreiten der Ansprech-Druckdifferenz von der Scherkante (4a, 16a1) durchtrennt wird und den Bersteinsatz (4) freigibt; und dass

c) sich der Bersteinsatz (4) und sein Trennwandsitz von innen nach aussen konisch oder pyramidenstumpfförmig erweitern.

2. Verschlusssystem nach Anspruch 1, dadurch gekennzeichnet, dass der Kassetteneinsatz (4) Mineralfasern (8) als Dämmstoff enthält.

3. Verschlusssystem nach Anspruch 1, dadurch gekennzeichnet, dass der Kassetteneinsatz (4) in Ganzmetall mit in seinem Inneren in Dämmrichtung zueinander beabstandet unter Bildung von Dämmzellen (4.3) geschichteten Dämmfolien (4.2, 4.20, 4.1) ausgeführt ist.

4. Verschlusssystem nach einem der Ansprüche 1 bis 3, dadurch gekennzeichnet, dass die Bersthaut eine gläserne Berstscheibe (5') ist, die dichtend an dem den Kassetteneinsatz umgebenden Trennwandbereich (9a) eingespannt ist.

5. Verschlusssystem nach einem der Ansprüche 1 bis 3, dadurch gekennzeichnet, dass die Bersthaut eine metallene Berstfolie (5) ist.

6. Verschlusssystem nach einem der Ansprüche 1 bis 5, dadurch gekennzeichnet, dass die Scherkante die frontseitig vorstehende Kante (16a1) eines umlaufenden Mantelblechs (16) des Kassetteneinsatzes (4) ist.

7. Verschlusssystem nach Anspruch 3, dadurch gekennzeichnet, dass die Scherkante (4a) von einer in ihrem Randbereich doppelt, etwa V-förmig abgekanteten frontseitigen Dämmfolie (4.1) gebildet und diese Dämmfolie im Vergleich zu den übrigen Dämmfolien (4.2, 4.20) als Druckfolie in ihrer Wandstärke vergrössert ist.

## Claims

1. A thermally insulating closure system for pressure relief apertures of separating walls, in particular those of nuclear reactor buildings in the region of the passage of the main coolant connection members of a reactor pressure vessel through the biological shield, having bursting inserts of lightweight construction which can be pushed outwardly from their anchorage by an excess pressure on the reactor side, characterised in that

a) the bursting inserts (4) are in the form of thermally insulating box inserts; that

b) the bursting inserts (4) (as is known per se in bursting disc safety devices for apparatus or pipelines) abut with a surrounding cutting edge against an outer sealing bursting membrane (5, 5') of such a thickness that when the given pressure difference is reached or exceeded, the bursting membrane (5, 5') is cut through by the cutting edge (4a, 16a1) and releases the bursting insert (4); and that

c) the bursting insert (4) and its separating wall seating widen from the inside towards the outside, (in particular) conically or in the form of a truncated pyramid.

2. A closure system according to Claim 1, characterised in that the box insert (4) contains mineral fibres (8) as an insulating material.

3. A closure system according to Claim 1, characterised in that the box insert (4) is of allmetal construction having inside it stacked insulating foils (4.2, 4.20, 4.1), spaced from one another in the insulating direction to form insulating cells (4.3).

4. A closure system according to one of Claims 1 to 3, characterised in that the bursting membrane is a glass bursting disc (5') which is clamped in sealing fashion in the region of the separating wall (9a) surrounding the box insert.

5. A closure system according to one of Claims 1 to 3, characterised in that the bursting membrane is a metallic foil (5).

6. A closure system according to one of Claims 1 to 5, characterised in that the cutting edge is the edge (16a1) of a surrounding metal sheet covering (16) for the box insert (4), which edge projects at the front.

7. A closure system according to Claim 3, characterised in that the cutting edge (4a) is formed by an approximately v-shaped front insulating foil (4.1) which is folded twice in its edge region, said insulating foil having an increased wall thickness to serve as a pressure foil, compared with the remaining insulating foils (4.2, 4.20).

**Revendications**

1. Système de fermeture calorifuge pour des ouvertures de décharge de la pression dans des parois de séparation, notamment celles d'enceintes de réacteurs nucléaires dans la zone où la tubulure principale pour l'agent réfrigérant d'une cuve de réacteur sous pression traverse le bouclier biologique, comprenant des garnitures de rupture de construction légère, pouvant être poussées vers l'extérieur hors de leur ancrage par une surpression du côté du réacteur, caractérisé en ce que

a) les garnitures de rupture (4) sont agencées en cassettes calorifuges; en ce que

b) les garnitures de rupture (4) sont en contact par une arête de cisaillement (4a, 16 à 1) fermée sur elle-même de leur partie frontale avec une peau extérieure de rupture (5, 5') donnant de l'étanchéité et d'une épaisseur telle que la peau de rupture (5, 5') est traversée par l'arête de cisaillement (4a, 16 à 1) lorsqu'une certaine différence de pression est atteinte ou est dépassée et libère la garniture de rupture; et en ce que

c) la garniture de rupture (4) et son logement sur la paroi de séparation s'élargissent coniquement ou en forme de tronc de pyramide de l'intérieur vers l'extérieur.

2. Système de fermeture suivant la revendication 1, caractérisé en ce que la garniture en forme de cassette (4) contient des fibres minérales (8), comme matière calorifuge.

3. Système de fermeture suivant la revendication 1, caractérisé en ce que la garniture sous forme de cassette (4) est entièrement en métal, avec des feuilles calorifuges (4.2, 4.20, 4.1) mises en couche à l'intérieur, à distance l'une de l'autre, suivant la direction de propagation de la chaleur, avec formation de cellules de calorifugeage (4.3).

4. Système de fermeture suivant l'une des revendications 1 à 3, caractérisé en ce que la peau de rupture est un disque de rupture (5') en verre qui est bloqué avec étanchéité sur la région de la paroi de séparation (9a) entourant la garniture en forme de cassette.

5. Système de fermeture suivant l'une des revendications 1 à 3, caractérisé en ce que la peau de rupture est une feuille de rupture (5) métallique.

6. Système de fermeture suivant l'une des revendications 1 à 5, caractérisé en ce que le bord de cisaillement est le bord (16a1) en saillie du côté latéral frontal d'un tôle (16) fermée sur lui-même, formant enveloppe latérale, de la garniture en forme de cassette (4).

7. Système de fermeture suivant la revendication 3, caractérisé en ce que le bord de cisaillement (4a) est formé par une feuille calorifuge (4.1) du côté frontal, coudée deux fois à peu près en forme de V, dans sa région marginale, et l'épaisseur de paroi de cette feuille calorifuge est agrandie en feuille résistante à la pression par rapport aux autres feuilles calorifuges (4.2, 4.20).

FIG 1

FIG 2

FIG 3

FIG 4

AS

5'

4a

4.1

6    9

2    4

IS

**FIG 5**

AS

9a    3   A    5

9

6    16

2    4

IS

**FIG 6**

16a1

16a

15a

16

FIG 7

1

19

23

22

21

24

2

25

20

18

17

FIG 8

FIG 9